# EUROPÄISCHE PATENTSCHRIFT

(11) **EP 2 794 129 B1**
(45) Veröffentlichungstag und Bekanntmachung des Hinweises auf die Patenterteilung: **14.07.2021**
(21) Anmeldenummer: 12809810.0
(22) Anmeldetag: 19.12.2012
(51) Int. Cl.: B07B 11/02, B07B 7/01, B02C 17/18, B02C 23/06, C04B 24/26, C04B 40/00

(54) **EFFIZIENZSTEIGERUNG BEI VORRICHTUNGEN ZUR GRÖSSENSEPARIERUNG VON FESTSTOFFPARTIKELN**
INCREASE IN EFFICIENCY WITH DEVICES FOR SIZE-SEPARATION OF SOLID PARTICLES
AUGMENTATION DE L'EFFICACITÉ DE DISPOSITIFS DESTINÉS À LA SÉPARATION DE PARTICULES DE MATIÈRE SOLIDE SELON LEUR TAILLE

(30) Priorität: 22.12.2011 EP 11195090
(43) Veröffentlichungstag der Anmeldung: 29.10.2014
(73) Patentinhaber: Sika Technology AG, 6340 Baar (CH)
(72) Erfinder: MACKLIN, Michael, Browns Bay, Auckland 0630 (NZ); MÜLLER, Thomas, 69115 Heidelberg (DE)
(74) Vertreter: Sika Patent Attorneys
(86) Internationale Anmeldenummer: PCT/EP2012/076233
(87) Internationale Veröffentlichungsnummer: WO 2013/092763

(56) Entgegenhaltungen:
- EP-A1- 2 336 100
- WO-A1-2004/022237
- DE-A1- 19 906 476
- DE-A1-102007 046 834
- GB-A- 953 690
- GB-A- 2 183 506
- "Betonzusatzmittel", , 1 January 2000 (2000-01-01), Retrieved from the Internet: URL:http://deacademic.com/dic.nsf/dewiki/1 65225#Verz.C3.B6gerer_.28VZ.29 [retrieved on 2019-03-04]

## Beschreibung

### Technisches Gebiet

Die Erfindung betrifft die Verwendung einer Substanz zur Steigerung der Effizienz einer Vorrichtung zur Grössenseparierung von Feststoffpartikeln.

### Stand der Technik

Ein zentraler Schritt und wesentlicher Kostenfaktor bei der Herstellung von mineralischen Bindemitteln, insbesondere Zement, ist das Mahlen der grobkörnigen mineralischen Feststoffe zu feinem Pulver. So werden bei der Zementherstellung beispielsweise Klinker und, abhängig vom herzustellenden Zementtyp gegebenenfalls auch Zusatzstoffe, wie z.B. Hüttensand oder Kalkstein, zu feinem Pulver vermahlen. Zement und Zusatzstoffe können dabei grundsätzlich zusammen oder auch getrennt gemahlen werden. Typischerweise liegen die Partikelgrössen der mineralischen Bindemittel nach dem Mahlen im Bereich von < 50 µm.

Die Feinheit des mineralischen Bindemittels ist dabei ein wichtiges Qualitätsmerkmal. Beispielsweise weisen ausgehärtete Mörtel- oder Betonmischungen mit fein gemahlenen mineralischen Bindemitteln im Allgemeinen höhere Druckfestigkeiten auf als entsprechende Mischungen auf der Basis von gröber gemahlenen mineralischen Bindemitteln.

Um das Zerkleinern von Feststoffen in Mahlvorrichtungen zu erleichtern, können sogenannte Mahlhilfsmittel eingesetzt werden. Sie bewirken eine starke Reduktion der Mahldauer und des zur Mahlung erforderlichen Energieaufwandes. Als Mahlhilfsmittel haben sich seit den 60er-Jahren organische Flüssigkeiten bewährt, insbesondere Glykole und Aminoalkohole, sowie Mischungen davon. Sie werden in Mengen von bis zu ca. 0.2%, bezogen auf das Mahlgut, zusammen mit diesem der Zementmühle zugegeben.

Auch bekannt ist z.B. die Verwendung von Dispergiermitteln als Mahlhilfsmittel. Die WO 2005/123624 A1 (Sika) beschreibt diesbezüglich die Verwendung von Polycarboxylatethern zur Verbesserung der Mahleffizienz.

Bei grösseren Anlagen, z.B. in Zementwerken, sind den Mahlvorrichtungen üblicherweise sogenannte Vorrichtungen zur Grössenseparierung von Feststoffpartikeln nachgelagert. Derartige Vorrichtungen werden auch als Sichter bezeichnet. Zweck der Sichter ist es, die in der Mahlvorrichtung gemahlenen Feststoffe aufgrund ihrer Grösse zu klassieren bzw. zu separieren. Diejenigen Feststoffpartikel, welche ausreichend fein sind, werden als Produkt aus dem Mahlprozess entnommen, während zu grobe Partikel wieder der Mühle zugeführt werden, um diese weiter zu zerkleinern. Dies kann im kontinuierlichen Betrieb erfolgen und gewährleistet insbesondere eine enge Partikelgrössenverteilung der gemahlenen Feststoffe bei hoher Produktionsleistung.

Es ist aber grundsätzlich nach wie vor wünschenswert die Produktionsleistung solcher Anlagen mit möglichst geringem Aufwand zu steigern.

Das Dokument GB953690 offenbart eine Verwendung eines Fliessmittels zur Steigerung der Effizienz einer Vorrichtung zur Grössenseparierung von Feststoffpartikeln gemäß dem Oberbegriff des Anspruchs 1.

### Darstellung der Erfindung

Aufgabe der Erfindung ist es daher, die Herstellung von fein gemahlenen Feststoffen, insbesondere von mineralischen Bindemitteln, zu verbessern oder effizienter zu gestalten. Dabei soll insbesondere die Produktionsleistung gesteigert werden. Dies soll möglichst wirtschaftlich erfolgen und die Eigenschaften der gemahlenen Feststoffe sollen wenn möglich nicht nennenswert beeinträchtigt werden. Die Verbesserung soll insbesondere auf bestehenden Anlagen mit möglichst geringen Anpassungen möglich sein. Insbesondere im Falle von Bindemitteln soll die Verbesserung der Produktionsleistung keine signifikanten negativen Einflüsse auf die Eigenschaften der Bindemittel, wie z.B. das Abbinde- oder Erstarrungsverhalten oder die Verarbeitbarkeit, mit sich bringen. Überraschenderweise wurde gefunden, dass die erfindungsgemässe Aufgabe gemäss Anspruch 1 gelöst werden kann. Kern der Erfindung ist demnach die Verwendung eines Fliessmittels zur Steigerung der Effizienz einer Vorrichtung zur Grössenseparierung von Feststoffpartikeln gemäß Anspruch 1.

Wie sich in Versuchen überraschend gezeigt hat, kann durch die Verwendung eines Fliessmittels die Effizienz der Vorrichtung zur Grössenseparierung von Feststoffpartikeln signifikant verbessert werden. Die Fliessmittel sind dabei sogar wirksamer als herkömmliche Mahladditive wie beispielsweise Alkanolaminen oder Glykolverbindungen. Dies kommt für den Fachmann unerwartet, da Fliessmittel grundsätzlich zur Verflüssigung von wasserbasierten flüssigen Systemen ausgelegt sind und nicht für trockene oder pulverförmige Feststoffpartikeln wie sie aus Mahlprozessen resultieren.

Insbesondere ermöglicht die Verwendung eines Fliessmittels eine Verbesserung der Trennschärfe der Vorrichtung zur Grössenseparierung von Feststoffpartikeln bzw. des Sichters. Damit ist im Besonderen gemeint, dass der Anteil an fälschlicherweise als zu grob klassierten Feststoffpartikeln reduziert werden kann. Zu derartigen Falschklassierungen kann es z.B. durch lockere Agglomeration von mehreren bereits ausreichend fein gemahlenen Feststoffpartikeln kommen. Eine weitere Fehlerquelle ist eine Agglomeratbildung durch Anlagerung von ausreichend fein gemahlenen Feststoffpartikeln an groben Partikeln. Solche Agglomerate zerfallen z.B. durch mechanische Einwirkungen beim Umfüllen, Transport und späterer Verarbeitung der gemahlenen Feststoffe sowieso und stellen bezüglich dem Endprodukt kein nennenswertes Problem dar. Werden diese aber fälschlicherweise verworfen oder wieder in die Mahlvorrichtung zurückgeführt, wo sie unnötigerweise erneut gemahlen werden, wird die Produktionsleistung merklich reduziert.

Durch die erfindungsgemässe Verwendung eines Fliessmittels kann daher insbesondere die Produktionsleistung einer Mahlvorrichtung mit nachgelagerter Vorrichtung zur Grössenseparierung von Feststoffpartikeln gezielt gesteigert werden. Insbesondere kann dabei der Anteil an unnötigerweise in die Mahlvorrichtung zurückgeführten Feststoffpartikeln (auch "Rückgut" oder "Griese" genannt) reduziert werden.

Weiter erfordert die erfindungsgemässe Lösung keine Anpassungen oder Modifikationen bestehender Anlagen, da das Fliessmittel in einfacher Art und Weise dem Mahlgut oder den Feststoffpartikeln beigemischt werden kann. Damit wird eine flexible und wirtschaftliche Lösung bereitgestellt, welche auf bestehenden Anlagen in einfacher Art und Weise realisiert werden kann. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft die Verwendung eines Fliessmittels zur Steigerung der Effizienz einer Vorrichtung zur Grössenseparierung von Feststoffpartikeln.

Der Ausdruck "Vorrichtung zur Grössenseparierung" steht insbesondere für eine Vorrichtung zur Separierung von Feststoffpartikeln aufgrund ihrer Partikelgrösse. Derartige Vorrichtungen werden auch als Sichter bezeichnet. Entsprechend liegt der Zweck solcher Vorrichtungen oder Sichter darin, Feststoffpartikel, welche z.B. in einer Mahlvorrichtung gemahlen wurden, aufgrund ihrer Grösse zu klassieren bzw. zu separieren.

Mit dem Begriff "Fliessmittel" ist im vorliegenden Zusammenhang insbesondere eine Substanz gemeint, welche die Fliessfähigkeit von mit Wasser angemachten Mörtel- und/oder Betonzusammensetzungen zu verbessern und/oder den Wasserbedarf solcher Zusammensetzung zu reduzieren vermag. Solche Substanzen werden auch als "Verflüssiger" bezeichnet. Beispiele von Fliessmitteln sind ein Ligninsulfonat, ein Gluconat, ein Naphthalinsulfonat, ein Melaminsulfonat, ein Vinylcopolymer, ein Polycarboxylat, insbesondere ein Polycarboxylatether, oder Mischungen davon. Erfindungsgemäß ist das Fliessmittel ein Polycarboxylat.

"Feststoffpartikel" sind im vorliegenden Zusammenhang anorganische und/oder mineralische Feststoffpartikel. Diese liegen insbesondere in trockener und/oder pulverförmiger Form vor. Insbesondere bestehen die Feststoffpartikel aus anorganischen Stoffen für Bauzwecke, welche beispielsweise als Bestandteile für Zement-, Mörtel- und/oder Betonzusammensetzungen einsetzbar sind. Bevorzugt sind die Feststoffpartikel mineralische Bindemittel und/oder Zusatzstoffe für mineralische Bindemittel. Die Feststoffpartikel weisen typischerweise Partikelgrössen im Bereich von 0.01 - 1000 µm, insbesondere 0.1 - 100 µm auf.

Ein "mineralisches Bindemittel" ist dabei im Besonderen ein Bindemittel, insbesondere ein anorganisches Bindemittel, welches in Anwesenheit von Wasser, gegebenenfalls bei entsprechender Anregung, in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke oder Hüttensand), ein puzzolanisches Bindemittel (z.B. Flugasche, Trass oder Reisschalenasche) und/oder ein Bindemittel mit kombinierten Eigenschaften, wie z.B. gebrannter Ton bzw. Schiefer, sein. sein. Die Bindemittel können einzeln vorliegen oder in beliebigen Kombinationen.

Ein "Zusatzstoff für ein mineralisches Bindemittel" ist beispielsweise ein inerter mineralischer Stoff wie z.B. Kalkstein, Quarzmehl und/oder Pigmente.

Bevorzugt enthält wenigstens ein Teil der Feststoffpartikel ein mineralisches Bindemittel und/oder einen Zusatzstoff für ein mineralisches Bindemittel oder der wenigstens ein Teil der Feststoffpartikel besteht daraus. Ein Anteil des wenigstens einen Teils der Feststoffpartikel bezogen auf sämtliche Feststoffpartikel beträgt insbesondere wenigstens 50 Gew.-%, insbesondere wenigstens 75 Gew.-%, speziell wenigstens 90 Gew.-%.

Insbesondere enthält der wenigstens eine Teil der Feststoffpartikel mindestens 5 Gew.-%, bevorzugt mindestens 25 Gew.-%, insbesondere ≥ 50 Gew.-%, eines hydraulischen Bindemittels, bevorzugt Zement und/oder Zementklinker.

In einer weiteren vorteilhaften Ausführungsform enthält der wenigstens eine Teil der Feststoffpartikel 5 - 100 Gew.-%, insbesondere 5 - 65 Gew.-%, eines latenthydraulischen und/oder puzzolanischen Bindemittels, insbesondere Schlacke und/oder Flugasche.

Ebenso ist es möglich, dass der wenigstens eine Teil der Feststoffpartikel einen Zusatzstoff für mineralische Bindemittel und/oder einen inerten Bestandteil enthält oder daraus besteht.

Insbesondere kann wenigstens ein Teil der Feststoffpartikel ein Gemisch aus einem hydraulischen Bindemittel, insbesondere Zementklinker, und einem latenthydraulischen und/oder puzzolanischen Bindemittel und/oder einem Zusatzstoff für ein mineralisches Bindemittel darstellen. Bevorzugt sind z.B. Gemische aus einem Zementklinker, Schlacke und/oder Flugasche und/oder Kalkstein. Der Anteil des latenthydraulischen und/oder des puzzolanischen Bindemittels beträgt dabei insbesondere 5 - 95 Gew.-%, besonders bevorzugt 5 - 65 Gew.-%, insbesondere bevorzugt 15 - 35 Gew.-%, während wenigstens 35 Gew.-%, im Speziellen wenigstens 65 Gew.-%, des hydraulischen Bindemittels vorliegen. Des Weiteren kann im Gemisch zusätzlich ein inerter Stoff, z.B. Kalkstein, vorliegen. Solche Mischungen lassen sich nach dem Mahlen beispielsweise als Bindemittelkomponenten in Mörtel- und Betonmischungen einsetzen.

Die Vorrichtung zur Grössenseparierung von Feststoffpartikeln bzw. der Sichter ist insbesondere so ausgelegt, dass die Feststoffpartikel in trockenem Zustand separiert werden können.

Insbesondere ist die Vorrichtung zur Grössenseparierung von Feststoffpartikeln so ausgelegt und/oder wird insbesondere so betrieben, dass eine Trenngrenze bei ca. 10 - 40 µm liegt. Das heisst, dass Feststoffpartikel mit einer Partikelgrösse oberhalb der Trenngrenze von Feststoffpartikeln mit einer Partikelgrösse unterhalb der Trenngrenze separiert werden sollen.

Besonders bevorzugt ist die Vorrichtung zur Grössenseparierung von Feststoffpartikeln ein Windsichter. Bei einem Windsichter werden die Feststoffpartikel insbesondere anhand des Verhältnisses von Strömungswiderstand, Schwerkraft und/oder Zentrifugalkraft in einem Gasstrom getrennt.

In der Praxis werden verschiedene Typen von Windsichtern eingesetzt. Unterschieden werden insbesondere statische Windsichter und dynamische Windsichter. Die dynamischen Windsichter werden dabei entsprechend ihrer Bauweise üblicherweise drei verschiedenen Generationen (1., 2. und 3. Generation) zugeordnet.

Bei den dynamischen Windisichtern der 1. und 2. Generation werden die zu separierenden Feststoffpartikel im Allgemeinen von oben auf eine rotierende Verteilerplatte gelenkt, wodurch die Partikel in horizontaler Richtung in eine um die Verteilerplatte herum angeordnete Separierungszone geschleudert werden. In der Separierungszone strömt Luft in vertikaler Richtung nach oben. Aufgrund des Verhältnisses von Strömungswiderstand, Schwerkraft und Zentrifugalkraft sinken Partikel mit einer Grösse bzw. einem Gewicht über der Trenngrenze nach unten, während Partikel mit einer Grösse bzw. einem Gewicht unterhalb der Trenngrenze vom Luftstrom mitgerissen werden. Dadurch wird die gewünschte Grössenseparierung erreicht. Der Unterschied zwischen Windsichtern der 1. und der 2. Generation liegt insbesondere darin, dass bei Windsichtern der 2. Generation keine intern zirkulierenden Luftströme sondern von externer Seite zugeführte Luftströme verwendet werden. Dadurch kann die Effizienz verbessert werden.

Bei dynamischen Windsichtern der 3. Generation werden die zu separierenden Feststoffpartikel üblicherweise von einer rotierenden Platte in einen in vertikaler Richtung um eine rotierende Käfigstruktur strömenden Luftstrom gelenkt. Die zu separierenden Feststoffpartikel gelangen je nach Verhältnis von Strömungswiderstand und Zentrifugalkraft entweder in das Innere der Käfigstruktur (Partikel mit einer Grösse bzw. einem Gewicht unterhalb der Trenngrenze) oder bewegen sich in radialer Richtung von der Käfigstruktur weg (Partikel mit einer Grösse bzw. einem Gewicht über der Trenngrenze). Derartige Windsichter sind besonders kompakt und verfügen über eine hohe Trennschärfe und Effizienz.

Windsichter haben sich insbesondere für die Separierung von Feststoffpartikeln wie sie in gemahlenen mineralischen Bindemitteln und/oder in Zusatzstoffen für derartige Bindemittel vorliegen, in der Praxis bewährt. Grundsätzlich funktioniert die vorliegende Erfindung mit sämtlichen Windsichtern, unabhängig vom Typ und der Konstruktion.

Der Windsichter ist dabei insbesondere als Hocheffienzsichter (im Englischen auch als "High Efficiency Separator" bezeichnet) mit einem nichtzirkulierenden Luftstrom ausgebildet. Verglichen mit Windsichtern mit zirkulierendem Luftstrom sind derartige Hocheffienzsichter insbesondere effizienter im Hinblick auf die Rückgut- oder Gieseproblematik. Besonders bevorzugt ist der Windsichter ein Windsichter der 3. Generation.

Grundsätzlich kann die Vorrichtung zur Grössenseparierung von Feststoffpartikeln aber auch anders ausgebildet sein, z.B. als Zentrifugalkraftsichter, Schwerkraftsichter, Messzyklon, Strahlumlenksichter, Impaktor oder Plansichter.

Die Vorrichtung zur Grössenseparierung von Feststoffpartikeln ist insbesondere einer Mahlvorrichtung, bevorzugt einer Zementmühle, nachgeschaltet. Die Mahlvorrichtung kann z.B. eine Kugelmühle, eine Walzenschüsselmühle (im Englischen auch als "Vertical Roller Mill" bezeichnet), eine GutbettWalzenmühle (im Englischen auch als "Roller Press Mill" bezeichnet) oder eine HORO-Mühle sein (im Englischen auch als "Horizontal Roller Mill" bezeichnet) sein. Prinzipiell spielt die Art der Mühle keine Rolle.

Mit Vorteil werden dabei Feststoffpartikel, welche eine vorgegebene Grösse oder die Trenngrenze überschreiten, aus der Vorrichtung zur Grössenseparierung erneut der Mahlvorrichtung zugeführt. Dies kann insbesondere während dem Betrieb und in kontinuierlicher Weise erfolgen. Das Zusammenspiel zwischen Mahlvorrichtung und Vorrichtung zur Grössenseparierung von Feststoffpartikeln ermöglicht somit eine besonders effiziente Produktion von gemahlenen Feststoffpartikeln mit definierter Partikelgrössenverteilung.

Prinzipiell können die Mahlvorrichtung und die Vorrichtung zur Grössenseparierung von Feststoffpartikeln aber auch getrennt vorliegen. Der Mahlvorgang und die Sichtung der Feststoffpartikel können entsprechend auch unabhängig voneinander durchgeführt werden. Feststoffpartikel welche in der Vorrichtung zur Grössenseparierung von Feststoffpartikeln als zu gross klassiert wurden, können in diesem Fall beispielsweise in einem separaten Schritt zur Nachmahlung der Mahlvorrichtung zugeführt werden. Dies ist aber im Allgemeinen weniger effizient.

Mit dem Begriff "Mahlen" oder "Mahlprozess" wird insbesondere ein Verfahren verstanden, bei welchem eine mittlere Korn- oder Partikelgrösse eines Feststoffs oder eines Gemischs von verschiedenen Feststoffen reduziert wird. Dies erfolgt in einer Mahlvorrichtung, insbesondere in einer Mühle, speziell in einer Zementmühle.

Der Mahlprozess kann beispielsweise das Mahlen von Klinker, gegebenenfalls zusammen mit inerten und/oder aktiven Zusatzstoffen, wie z.B. mit Gips, Anhydrit, α-Halbhydrat, β-Halbhydrat, latenthydraulischen Bindemitteln, puzzolanischen Bindemittel und/oder inerten Füllstoffen beinhalten.

Typischerweise wird der Feststoff oder das Gemisch von verschiedenen Feststoffen, insbesondere ein mineralisches Bindemittel, beim Mahlen auf einen Blaine-Wert von wenigstens 500 cm²/g, insbesondere wenigstens 1'000 cm²/g, bevorzugt wenigstens 2'000 cm²/g, noch weiter bevorzugt wenigstens 2'500 cm²/g, gemahlen.

Das Fliessmittel ist erfindungsgemäß ein Polycarboxylat. Weiter bevorzugt ist das Polycarboxylat ein Kammpolymer, welches über einen Polycarboxylatrückgrat und Polyetherseitenketten verfügt, wobei die Polyetherseitenketten über Ester-, Ether- und/oder Amidgruppen an das Polycarboxylatrückgrat gebunden sind. Derartige Fliessmittel haben sich im vorliegenden Zusammenhang als äusserst vorteilhaft erwiesen. Zudem ist bekannt, dass derartige Fliessmittel mit Bindemitteln gut kompatibel sind und teilwiese sogar Vorteile mit sich bringen.

Das Polycarboxylat ist insbesondere ein Kammpolymer, welches folgende Teilstruktureinheiten umfasst oder daraus besteht:
a) a Molanteile einer Teilstruktureinheit **S1** der Formel (I) 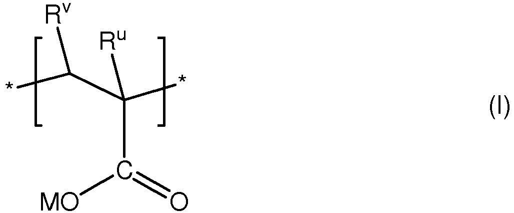
b) b Molanteile einer Teilstruktureinheit **S2** der Formel (II) 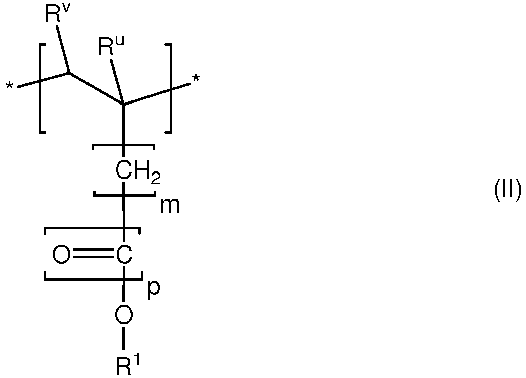
c) c Molanteile einer Teilstruktureinheit **S3** der Formel (III) 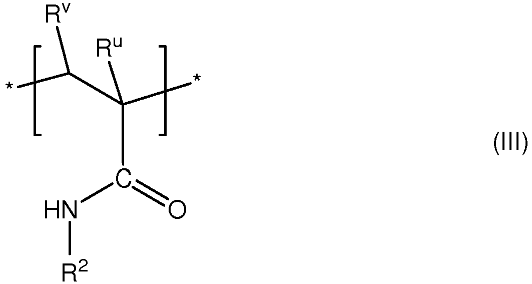
d) d Molanteile einer Teilstruktureinheit **S4** der Formel (IV) 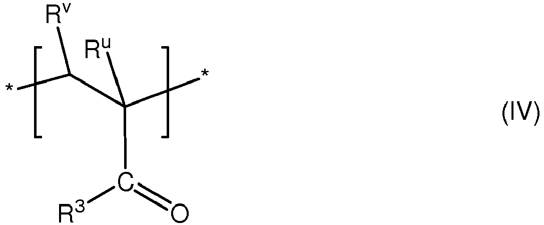 wobei
   M unabhängig voneinander H⁺, ein Alkalimetallion, Erdalkalimetallion, ein zwei oder dreiwertiges Metallion, ein Ammoniumion oder eine organische Ammoniumgruppe darstellt, jede
   s R^{u} unabhängig von den anderen für Wasserstoff oder eine Methylgruppe steht,
   jedes R^{v} unabhängig von den anderen für Wasserstoff oder COOM steht,
   m = 0, 1 oder 2 ist,
   p = 0 oder 1 ist,
   R¹ und R² unabhängig voneinander für eine C₁- bis C₂₀-Alkylgruppe, -Cycloalkylgruppe, -Alkylarylgruppe oder für -[AO]ₙ-R⁴ steht,
      wobei A = C₂- bis C₄-Alkylen, R⁴ für H, eine C₁- bis C₂₀-Alkylgruppe, -Cyclohexylgruppe oder -Alkylarylgruppe steht,
      und n = 2 - 250,
   R³ unabhängig voneinander für NH₂, -NR⁵R⁶, -OR⁷NR⁸R⁹ stehen,
      wobei R⁵ und R⁶ unabhängig voneinander für
         eine C₁- bis C₂₀-Alkylgruppe, -Cycloalkylgruppe -Alkylaryl¬gruppe oder -Arylgruppe stehen,
         oder für eine Hydroxyalkylgruppe oder für eine Acetoxyethyl- (CH₃-CO-O-CH₂-CH₂-) oder eine Hydroxy-isopropyl-(HO-CH(CH₃)-CH₂-) oder eine Acetoxyisopropylgruppe (CH₃-CO-O-CH(CH₃)-CH₂-) stehen;
      oder R⁵ und R⁶ bilden zusammen einen Ring, von dem der Stickstoff ein Teil ist, um einen Morpholin- oder Imidazolinring aufzubauen;
      R⁷ eine C₂ -C₄-Alkylengruppe ist,
      R⁸ und R⁹ je unabhängig voneinander eine C₁- bis C₂₀-Alkylgruppe, -Cycloalkylgruppe, -Alkylarygruppe, -Arylgruppe oder eine Hydroxyalkylgruppe darstellen,
   und wobei a, b, c und d Molanteile der jeweiligen Teilstruktureinheiten **S1, S2, S3** und **S4** darstellen, mit
   a/b/c/d = (0.1 - 0.9) / (0.1 - 0.9) / (0 - 0.8) / (0 - 0.8),
   insbesondere a/b/c/d = (0.3 - 0.9) / (0.1 - 0.7) / (0 - 0.6) / (0 - 0.4),
   bevorzugt a/b/c/d = (0.5 - 0.8) / (0.2 - 0.4) / (0.001 - 0.005) / 0
   und mit der Massgabe dass a + b + c + d = 1 ist.

Die Abfolge der Teilstruktureinheiten **S1, S2, S3** und **S4** kann alternierend, blockartig oder zufällig sein. Prinzipiell ist es auch möglich, dass zusätzlich zu den Teilstruktureinheiten **S1, S2, S3** und **S4** weitere Struktureinheiten vorliegen.

Bevorzugt weisen die Teilstruktureinheiten **S1, S2, S3,** und **S4** zusammen einen Gewichtsanteil von wenigstens 50 Gew.-%, insbesondere wenigstens 90 Gew.-%, ganz besonders bevorzugt wenigstens 95 Gew.-%, am Gesamtsgewicht des Kammpolymers auf.

Die Herstellung der Kammpolymere ist dem Fachmann an sich bekannt und kann beispielsweise durch radikalische Polymerisation der entsprechenden Monomere der Formel (Iₘ), (IIₘ), (IIIₘ) bzw. (IVₘ) erfolgen, was zu einem Kammpolymer **KP** mit den Teilsstruktureinheiten **S1, S2, S3** und **S4** führt. Die Reste R^{u}, R^{v}, R¹, R², R³, M, m und p sind dabei wie vorstehend beschreiben definiert.

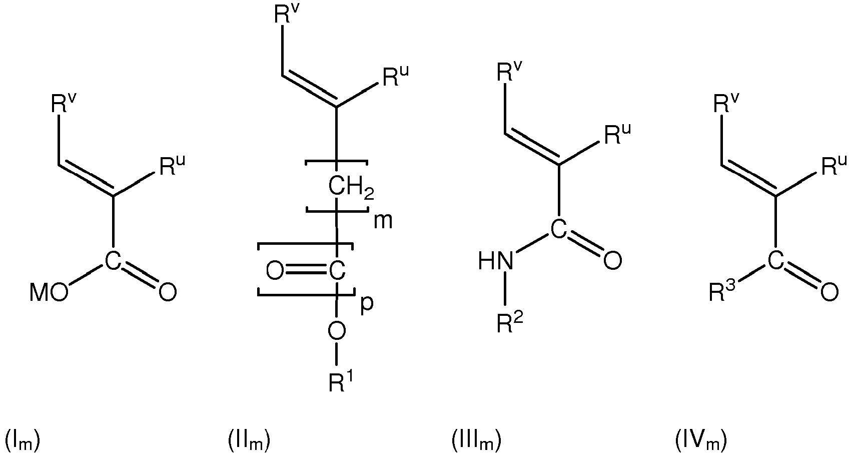

Ebenfalls möglich ist die Herstellung der Kammpolymere durch polymer-analoge Umsetzung einer Polycarbonsäure der Formel (V).

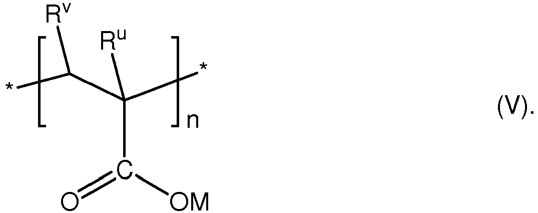

Bei der polymer-analogen Umsetzung wird die Polycarbonsäure der Formel (V) mit den korrespondierenden Alkoholen oder Aminen (z.B. HO-R¹, H₂N-R², H-R³) verestert bzw. amidiert und dann allenfalls neutralisiert oder teilneutralisiert (je nach Art des Rests M z.B. mit Metallhydroxiden oder Ammoniak). Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Abart davon, wie sie in EP 1 348 729 A1 auf Seite 3 bis Seite 5 sowie in dessen Beispielen beschrieben sind, kann das Kammpolymer in festem Aggregatszustand hergestellt werden. Die Offenbarung dieser genannten Patentschriften wird hiermit insbesondere durch Bezugnahme eingeschlossen. Die Herstellung durch polymer-anloge Umsetzung ist bevorzugt.

Entsprechende Kammpolymere werden auch von Sika Schweiz AG unter der Handelsnamenreihe ViscoCrete® kommerziell vertrieben.

R^{v} stellt insbesondere Wasserstoff dar und R^{u} steht bevorzugt für Wasserstoff und/oder eine Methylgruppe.

Bevorzugt ist m = 0 und p = 1.

Auch vorteilhaft ist m = 1 - 2 und p = 0.

Insbesondere ist R^{v} gleich Wasserstoff, R^{u} steht für eine Methylgruppe, m = 1 - 2 und p = 0.

R¹ und/oder R² stehen, jeweils unabhängig voneinander, mit Vorteil für -[AO]ₙ-R⁴ mit n = 8 - 200, insbesondere 20 - 70, und A für ein C₂- bis C₄-Alkylen.

R⁴ ist, jeweils unabhängig voneinander, bevorzugt Wasserstoff oder eine Methylgruppe.

Ganz besonders vorteilhaft sind Polycarboxylate oder Kammpolymere wobei
a) die Reste R^{u} und R^{v} für Wasserstoff stehen,
b) m = 0 ist,
c) p = 1 ist,
d) R¹ und R², jeweils unabhängig voneinander, für -[AO]ₙ-R⁴ mit n = 20 - 70 und A = C₂-Alkylen steht,
e) R⁴ eine Methylgruppe darstellt und/oder
f) a/b/c/d = (0.5 - 0.8) / (0.2 - 0.4) / (0.001 - 0.005) / 0

Ebenfalls vorteilhaft sind Kammpolymere oder Polycarboxylate wobei
a) p = 0 und m = 1 - 2,
b) R¹, jeweils unabhängig voneinander, für -[AO]ₙ-R⁴ mit n = 8 - 200, insbesondere 20 - 70, steht,
c) R⁴ Wasserstoff oder eine Methylgruppe darstellt, insbesondere Wasserstoff,
d) und/oder A für ein C₂- bis C₄-Alkylen, insbesondere ein C₂-Alkylen, steht.

Ein gewichtsgemitteltes Molekulargewicht (M_{w}) des Kammpolymers oder Polycarboxylats beträgt insbesondere 5'000 - 150'000 g/mol, bevorzugt 10'000-100'000 g/mol, speziell 20'000 - 90'000 g/mol. Das gewichtsgemittelte Molekulargewicht (M_{w}) wird durch Gelpermeationschromatographie (GPC) bestimmt, wobei Polyethylenglycol (PEG) als Standard verwendet wird.

Das Fliessmittel kann insbesondere als alleiniger Zusatz bzw. ohne weitere Komponenten eingesetzt werden.

Weiter kann es vorteilhaft sein, wenn das Fliessmittel in Form einer Zusammensetzung mit wenigstens einem Additiv, beispielsweise einem Mahladditiv, einem Betonzusatzmittel und/oder einem Mörtelzusatzmittel verwendet wird.

Das wenigstens eine Additiv umfasst insbesondere ein weiteres Fliessmittel, ein Mahlhilfsmittel, ein Chromreduzierer, eine Entschäumer, einen Farbstoff, ein Konservierungsmittel, ein Fliessmittel, einen Verzögerer, Beschleuniger, einen Luftporenbildner, einen Schwindreduzierer, einen Korrosionsinhibitor oder Mischungen davon.

Konkret können beispielsweise eingesetzt werden:
a) ein oder mehrere Alkanolamine und/oder Salze davon
b) ein oder mehrere Alkali- und/oder Erdalkalinitrate
c) ein oder mehrere Alkali- und/oder Erdalkalinitrite
d) ein oder mehrere Alkali- und/oder Erdalkalithiocyanate
e) ein oder mehrere α-Hydroxycarbonsäuren
f) ein oder mehrere Alkali- und/oder Erdalkalihalogenide
g) Glyzerin und/oder Glyzerinderivate
h) ein oder mehrere Glykole und/oder Glykolderivate
i) ein oder mehrere Aluminiumsalze
j) ein oder mehrere Alkali- und/oder Erdalkalihydroxide
k) ein oder mehrere Gluconate
l) ein oder mehrere Ligninverbindungen
m) Melasse
n) ein oder mehrere Saccharide
o) ein oder mehrere Monocarbonsäuren, z.B. Essigsäure.

Dabei können auch Mischungen der unter a) - o) genannten Substanzen vorliegen.

Gemäss einer weiteren vorteilhaften Ausführungsform wird das Fliessmittel in Form einer Zusammensetzung mit wenigstens einem Mahlhilfsmittel eingesetzt. Insbesondere falls die Vorrichtung zur Grössenseparierung bzw. der Sichter einer Mahlvorrichtung nachgeschaltet ist, wird kann dadurch eine gute Mahleffizienz erreicht werden. Zudem hat sich gezeigt, dass das Mahlhilfsmittel im Hinblick auf die Verbesserung der Sichtereffizient gut kompatibel ist.

Das wenigstens eine Mahlhilfsmittel ist insbesondere ausgewählt aus der Gruppe umfassend Glykole, organische Amine und Ammoniumsalze von organischen Aminen mit Carbonsäuren.

Gemäss einer vorteilhaften Ausführungsform umfasst das wenigstens eine Mahlhilfsmittel ein Alkanolamin, wobei es sich insbesondere um Triethanolamin und/oder Triisopropylamin handelt.

Entsprechend einer anderen vorteilhaften Ausführungsform umfasst das wenigstens eine Mahlhilfsmittel ein Glykol, wobei es sich insbesondere um Diethylenglykol handelt.

Solche Zusammensetzungen sind im Speziellen vorteilhaft im Hinblick auf Mahleffizienz und Bindemittelmitteleigenschaften.

Eine besonders bevorzugte Zusammensetzung beinhaltet oder besteht aus:
a) 5 - 99 Gew.-%, bevorzugt 5 - 50, weiter bevorzugt 5 - 30 Gew.-% Gew.-%, des Fliessmittels;
b) 1 - 80 Gew.-%, bevorzugt 5 - 60 Gew.-%, weiter bevorzugt 5 - 30 Gew.-%, des wenigstens einen Mahlhilfsmittels;
c) 0 - 90 Gew.-%, insbesondere 1 - 20 Gew.-%, wenigstens einer weiteren Komponente;
d) 0 - 90 Gew.-%, insbesondere 10 - 60 Gew.-%, Wasser.

Das Fliessmittel ist dabei ein Polycarboxylat, insbesondere ein Kammpolymer, wie es vorstehend definiert ist. Ein besonders bevorzugtes Mahlhilfsmittel ist ein Aminoalkohol und/oder ein Glykol, insbesondere wie vorstehend beschrieben.

Als wenigstens eine weitere Komponente ist insbesondere eine Monocarbonsäuren, z.B. Essigsäure, vorteilhaft.

Das Fliessmittel wird bevorzugt in einer Menge von 0.001 - 1 Gew.-%, insbesondere 0.003 - 0.2 Gew.-%, weiter bevorzugt 0.003 - 0.1 Gew.-%, noch weiter bevorzugt, 0.005 - 0.07 Gew.-%, bezogen auf das Gewicht der Feststoffpartikel, verwendet. Damit wird eine optimale Wirkung erreicht. Die Angaben beziehen sich dabei auf den Anteil des reinen Fliessmittels ohne allfällige weitere Komponenten, welche z.B. bei Verwendung des Fliessmittels in Form einer Zusammensetzung vorliegen können.

Das Fliessmittel oder die Zusammensetzung werden mit Vorteil in flüssigem Aggregatszustand eingesetzt. Damit kann eine bessere Verteilung und Benetzung der Feststoffpartikel erreicht werden. Beispielsweise kann das Fliessmittel oder die Zusammensetzung als Lösung oder Dispersion vorliegen. Insbesondere als wässrige Lösung oder Dispersion.

Grundsätzlich ist es aber auch möglich, dass Fliessmittel oder die Zusammensetzung als Schmelze oder in festem Aggregatszustand, z.B. in Form von Pulver, Pellets oder Schuppen, einzusetzen.

Das Fliessmittel oder die Zusammensetzung werden insbesondere vor und/oder während einem Mahlprozess der Feststoffpartikel zu diesen zugegeben. Dadurch wird eine optimale Durchmischung erreicht.

Prinzipiell kann die Zugabe aber auch nach dem Mahlprozess erfolgen, wobei aber eine ausreichende Verteilung des Fliessmittels oder der Zusammensetzung zu gewährleisten ist. Dies kann beispielsweise durch Besprühen erfolgen.

Aus den nachfolgenden Ausführungsbeispielen erschliessen sich dem Fachmann weitere vorteilhafte Ausführungsformen der Erfindung.

### Kurze Beschreibung der Zeichnungen

Die zur Erläuterung der Ausführungsbeispiele verwendete Zeichnung zeigt:

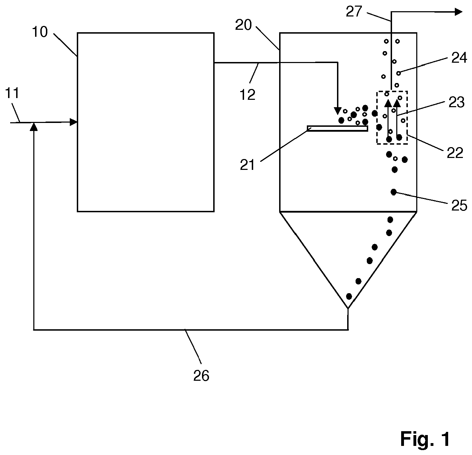

- Fig. 1: Eine schematische Darstellung einer Anordnung aus einer Durchlaufkugelmühle mit nachgeschaltetem Windsichter.

### Ausführungsbeispiele

### 1. Mahlvorrichtung mit Windsichter

Fig. 1 zeigt eine schematische Darstellung einer verwendeten Anordnung aus Durchlaufkugelmühle 10 und Windsichter 20. Zu mahlende Feststoffe 11, z.B. Zementklinker, werden dabei der Durchlaufkugelmühle 10 zugeführt, und darin in an sich bekannter Weise gemahlen. Die gemahlenen Feststoffpartikel 12, z.B. gemahlener Zementklinker, werden anschliessend dem nachgeschalteten Windsichter 20 zugeführt. Im Windsichter 20 werden die gemahlenen Feststoffpartikel 12 auf eine rotierende Verteilerplatte 21 gelenkt, wodurch die Partikel in horizontaler Richtung in eine neben der Verteilerplatte 21 angeordnete Separierungszone 22 geschleudert werden. In der Separierungszone 22 strömt Luft 23 in vertikaler Richtung nach oben. Grobe Partikel 25 mit einer Grösse bzw. einem Gewicht über der Trenngrenze sinken dabei nach unten, während feine Partikel 24 mit einer Grösse bzw. einem Gewicht unterhalb der Trenngrenze vom Luftstrom 23 mitgerissen und als Produkt 27 aus dem Windsichter 20 ausgegeben werden. Die groben Partikel 25, welche im Windsichter 20 als zu grob klassiert wurden, werden der Kugelmühle 10 über die Fördereinrichtung 26 kontinuierlich wieder zugeführt und erneut gemahlen. Dadurch wird ein kontinuierlicher Betrieb möglich.

### 2. Verwendete Materialen

### 2.1 Fliessmittel

Für die nachfolgenden Versuche wurde ein Fliessmittel in Form eines Kammpolymer **KP1** in an sich bekannter Weise durch polymer-analoge Umsetzung von Polyacrylsäure (M_{w} = 4'500 g/mol) mit Alkoholen vom Typ HO-R¹ und Aminen vom Typ H₂N-R² hergestellt (Umsetzungsgrad grösser 97%). Die hierfür verwendeten Rohstoffe sind kommerziell bei verschiedenen Anbietern erhältlich. Die Struktur des so hergestellten Kammpolymers **KP1** entspricht dabei dem vorgängig beschriebenen Kammpolymer mit den Teilstruktureinheiten **S1, S2** und **S3,** wobei:
- R^{u} und R^{v} für Wasserstoff stehen;
- m = 0 und p = 1 sind;
- R¹ für eine Mischung aus einem methoxy-terminierten Polyethylenglykol mit Masse Mₙ = 1000 g/mol (PEG1000-OCH₃) und einem methoxy-terminierten Polyethylenglykol mit Masse Mₙ = 3000 g/mol (PEG3000-OCH₃) steht. Das Molverhältnis von PEG1000-OCH₃ zu PEG3000-OCH₃ beträgt dabei 0.205/0.153.
- R² ein methoxy-terminiertes Ethylenoxid-/Porpylenoxid-Copolymer mit Masse Mₙ = 2000 g/mol, wobei das Ethylenoxid- und Porpylenoxid-Einheiten in einem Molverhältnis von 50:50 vorliegen;
- a/b/c/d = 0.640/0.205/0.153/0.002/0 ist, und
- das Molekulargewicht des Kammpolymers (M_{w}) ca. 60'000 g/mol beträgt.

Erhalten wurde eine Lösung enthaltend 40 Gew.-% des Kammpolymers in Wasser.

Derartige Kammpolymere sind auch kommerziell bei Sika Schweiz unter dem Namen Viscocrete erhältlich.

### 2.1 Zusammensetzung Z1

Eine erste Zusammensetzung **Z1** wurde hergestellt durch Vermischen von 10 Gew.-% (Feststoffgehalt) des Kammpolymers **KP1,** 30 Gew.-% Diethylenglykol und 5 Gew.-% Essigsäure (60 Gew.-% in Wasser) in 55 Gew.-% Wasser.

### 2.2 Zusammensetzung Z2

Eine zweite Zusammensetzung **Z2** wurde hergestellt durch Vermischen von 10 Gew.-% des Kammpolymers **KP1,** 20 Gew.-% Triisopropanolamin (85 Gew.-% in Wasser), 10 Gew.-% Triethanolamin (80 Gew.-% in Wasser), 5 Gew.-% Essigsäure (60 Gew.-% in Wasser) in 55 Gew.-% Wasser.

### 2.3 Zusammensetzung Z3

Eine dritte Zusammensetzung **Z3** wurde im Wesentlichen wie Zusammensetzung **Z1** hergestellt wobei aber kein Kammpolymer beigemischt wurde und stattdessen die Menge an Diethylenglykol entsprechend erhöht wurde.

### 2.4 Zusammensetzung Z4

Eine vierte Zusammensetzung **Z4** wurde im Wesentlichen wie Zusammensetzung **Z2** hergestellt wobei aber kein Kammpolymer beigemischt wurde und stattdessen die Menge an Triethanolamin und Triisopropylamin anteilsmässig erhöht wurde.

### 3. Mahlversuche ohne Sichter (Chargenprozess)

Zu Vergleichszwecken wurden die Zusammensetzungen **Z1** und **Z3** als Additive in Mahlversuchen **(M1** und **M2)** eingesetzt. Dabei wurden jeweils gleiche Mengen eines Zementklinkers unter identischen Bedingungen auf Laborkugelmühlen gemahlen. Die Mahlversuche wurden dabei als Chargenprozess (Batchprozess) durchgeführt. Versuch **R1** ist ein Referenzversuch ohne Additiv. Die Zusammensetzungen **Z1** und **Z3** wurden dem Zementklinker vor dem Mahlvorgang zugegeben in einer Dosierungen von jeweils 0.025 Gew.-% bezogen auf den Zementklinker. Die Mahldauer und Mahlparameter wurden bei allen Mahlversuchen konstant gehalten.

Nach erfolgtem Mahlvorgang wurde die Feinheit nach Blaine bestimmt. Tabelle 1 gibt einen Überblick über die durchgeführten Mahlversuche und die entsprechenden Resultate.

**Tabelle 1**

| **Versuch** | **R1** | **M1** | **M2** |
|---|---|---|---|
| Additiv | - | **Z1** | **Z3** |
| Feinheit [cm²/g] | 2'200 | 2'760 | 2'880 |

Aus Tabelle 1 ist insbesondere ersichtlich, dass sowohl die Zusammensetzung **Z1** mit Fliessmittel als auch die Zusammensetzung **Z3** ohne Fliessmittel die Mahlfeinheit gegenüber der Mahlung ohne Additiv (**R1**) signifikant verbessert. Mit der Zusammensetzung **Z3** (ohne Fliessmittel) ist jedoch eine um ca. 6% höhere Mahlfeinheit erreichbar als mit Zusammensetzung **Z1** (mit Fliessmittel). Rein im Hinblick auf die Mahleffizienz bringt die Verwendung eines Fliessmittels somit keine Vorteile.

### 4. Mahlversuche ohne Sichter (Kontinuierlicher Prozess)

Ebenfalls zu Vergleichszwecken wurden die Zusammensetzungen **Z2** und **Z4** in Mahlversuchen auf einer Durchlaufkugelmühle ohne angeschlossenen Sichter (offener Kreislauf) verwendet. Der Zementklinker wurde der Durchlaufkugelmühle zusammen mit dem jeweiligen Additiv bzw. der jeweiligen Zusammensetzung **Z2** oder **Z4** zugeführt, wobei die Dosierung der Zusammensetzungen **Z2** und **Z4** jeweils 0.07 Gew.-% bezogen auf den Zementklinker betrug.

Der Zementklinker wurde jeweils auf eine konstante Blaine-Feinheit von ca. 4'000 cm²/g gemahlen.

Gemessen wurde anschliessend die Produktionsleistung pro Zeiteinheit sowie der Anteil an Partikeln mit einer Grösse über 45 µm. Die Bestimmung der Partikel über 45 µm erfolgte in an sich bekannter Weise durch Messung des Siebrückstands mit einem Luftstrahlsieb.

Tabelle 2 gibt einen Überblick über die durchgeführten Versuche (**M3** und **M4**) und die entsprechenden Resultate.

**Tabelle 2**

| **Versuch** | **M3** | **M4** |
|---|---|---|
| Additiv | **Z2** | **Z4** |
| Produktionsleistung [Tonnen/Stunde] | 55 | 55 |
| Anteil Partikel > 45 µm | 14.0% | 13.8% |

Aus Tabelle 2 ist insbesondere ersichtlich, dass im Hinblick auf die Produktionsleistung einer Mahlvorrichtung ohne nachgelagerten Sichter die Verwendung eines Fliessmittels gegenüber Aminoalkoholen keine Vorteile mit sich bringt. Auch lässt sich in diesem Fall der Anteil der groben Partikel > 45 µm durch das Fliessmittel nicht weiter reduzieren.

### 5. Mahlversuche mit Sichter

Bei den Mahlversuchen mit Sichter wurde Zementklinker mit einer Durchlaufkugelmühle und nachgeschaltetem Windsichter im geschlossenen Kreislauf wie in Fig. 1 schematisch dargestellt gemahlen. Der Zementklinker wurde der Durchlaufkugelmühle zusammen mit dem gegebenenfalls eingesetzten Additiv bzw. der jeweiligen Zusammensetzung **Z1** oder **Z3** zugeführt, wobei die Dosierung der Zusammensetzungen **Z1** oder **Z3** jeweils 0.025 Gew.-% bezogen auf den Zementklinker betrug.

Der Zementklinker wurde jeweils auf eine konstante Blaine-Feinheit von ca. 3'500 cm²/g gemahlen.

Gemessen wurde anschliessend die Produktionsleistung pro Zeiteinheit.

Tabelle 3 gibt einen Überblick über die durchgeführten Versuche (**S1** und **S2**) und die entsprechenden Resultate. **R2** ist ein Referenzversuch ohne Additiv.

**Tabelle 3**

| **Versuch** | **R2** | **S1** | **S2** |
|---|---|---|---|
| Additiv | - | **Z1** | **Z3** |
| Produktionsleistung [Tonnen/Stunde] | 100 | 116 | 108 |
| Steigerung bezüglich **R2** | 0 | 16% | 8% |

Analoge Versuche mit einer Durchlaufkugelmühle und nachgeschaltetem Windsichter im geschlossenen Kreislauf wurden auf einer anderen Anlage auch mit den Zusammensetzungen **Z2** und **Z4** bei unterschiedlichen Konzentrationen durchgeführt. Tabelle 4 gibt einen Überblick über die durchgeführten Versuche (**S3** - **S5**) und die zugehörigen Resultate.

**Tabelle 4**

| **Versuch** | **S3** | **S4** | **S5** |
|---|---|---|---|
| Additiv | **Z4** | **Z2** | **Z2** |
| Konzentration Additiv [Gew.-%] | 0.03 | 0.03 | 0.045 |
| Produktionsleistung [Tonnen/Stunde] | 70 | 75 | 78 |
| Steigerung bezüglich **S3** | 0% | 7% | 11% |

Aus Tabelle 4 ist ebenfalls ersichtlich, dass durch die Verwendung eines Fliessmittels (Versuche **S4** und **S5**) eine deutliche Steigerung der Produktionsleistung möglich ist.

Zusammenfassend kann gesagt werden, dass die Verwendung eines Fliessmittels im Vergleich mit herkömmlichen Mahlhilfsmitteln keinen signifikanten Einfluss auf die Mahleffizienz bzw. den eigentlichen Mahlvorgang hat (vgl. Resultate in Tabellen 1 und 2). Jedoch kann durch die Verwendung eines Fliessmittels die Produktionsleistung im Verglich mit herkömmlichen Mahlhilfsmitteln bei nachgeschaltetem Sichter massiv gesteigert werden (vgl. Tabellen 3 und 4). Daraus lässt sich unmittelbar ableiten, dass die Verwendung eines Fliessmittels eine Steigerung der Effizienz einer Vorrichtung zur Grössenseparierung von Feststoffpartikeln bzw. eines Sichters ergibt.

Die vorstehend beschriebenen Ausführungsformen sind jedoch lediglich als illustrative Beispiele zu verstehen, welche im Rahmen der Erfindung, begrenzt durch die Ansprüche, abgewandelt werden können.

Insbesondere kann der in Fig. 1 gezeigte Windsichter auch anders ausgebildet sein, z.B. als dynamischer Windsichter der 3. Generation, wie vorstehend beschrieben.

## Patentansprüche

1. Verwendung eines Fliessmittels zur Steigerung der Effizienz einer Vorrichtung zur Grössenseparierung von Feststoffpartikeln, wobei es sich bei den Feststoffpartikeln um Partikel aus anorganischen und/oder mineralischen Feststoffen handelt, **dadurch gekennzeichnet, dass** das Fliessmittel ein Polycarboxylat ist.

2. Verwendung nach Anspruch 1, **dadurch gekennzeichnet, dass** die Vorrichtung zur Grössenseparierung von Feststoffpartikeln ein Windsichter ist.

3. Verwendung nach wenigstens einem der vorangehenden Ansprüche, **dadurch gekennzeichnet, dass** die Vorrichtung zur Grössenseparierung von Feststoffpartikeln einer Mahlvorrichtung, insbesondere einer Zementmühle, nachgeschaltet ist.

4. Verwendung nach Anspruch 3, **dadurch gekennzeichnet, dass** Feststoffpartikel, welche eine vorgegebene Grösse überschreiten, während dem Betrieb aus der Vorrichtung zur Grössenseparierung erneut der Mahlvorrichtung zugeführt werden.

5. Verwendung nach wenigstens einem der vorangehenden Ansprüche, **dadurch gekennzeichnet, dass** wenigstens ein Teil der Feststoffpartikel ein mineralisches Bindemittel und/oder ein Zusatzstoff für ein mineralisches Bindemittel enthält oder daraus besteht.

6. Verwendung nach wenigstens einem der vorangehenden Ansprüche, **dadurch gekennzeichnet, dass** das Polycarboxylat ein Kammpolymer ist, welches über einen Polycarboxylatrückgrat und Polyetherseitenketten verfügt, wobei die Polyetherseitenketten über Ester-, Ether- und/oder Amidgruppen an das Polycarboxylatrückgrat gebunden sind.

7. Verwendung nach einem der Ansprüche 1 - 6, **dadurch gekennzeichnet, dass** das Polycarboxylat oder Kammpolymer folgende Teilstruktureinheiten umfasst oder daraus besteht:
a) a Molanteile einer Teilstruktureinheit **S1** der Formel (I) 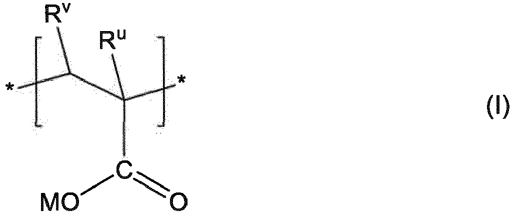
b) b Molanteile einer Teilstruktureinheit **S2** der Formel (II) 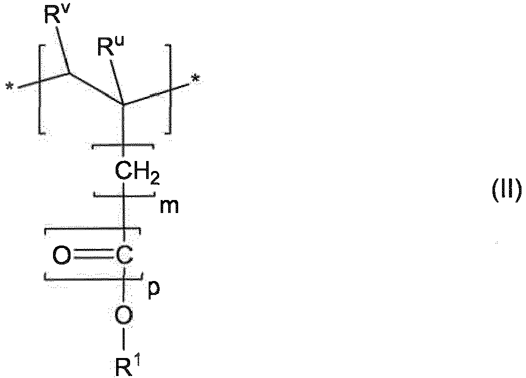
c) c Molanteile einer Teilstruktureinheit **S3** der Formel (III) 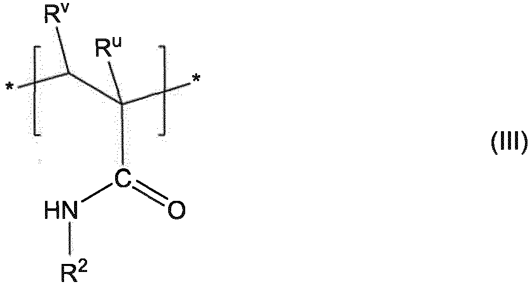
d) d Molanteile einer Teilstruktureinheit **S4** der Formel (IV) 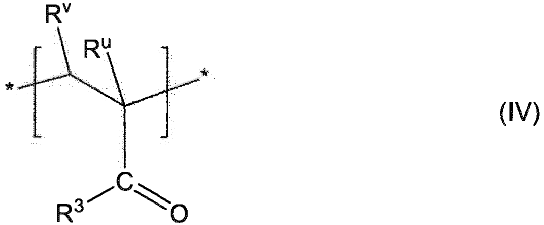 wobei
M unabhängig voneinander H⁺, ein Alkalimetallion, Erdalkalimetallion, ein zwei oder dreiwertiges Metallion, ein Ammoniumion oder eine organische Ammoniumgruppe darstellt,
jedes R^{u} unabhängig von den anderen für Wasserstoff oder eine Methylgruppe steht,
jedes R^{v} unabhängig von den anderen für Wasserstoff oder COOM steht,
m = 0, 1 oder 2,
p = 0 oder 1,
R¹ und R² unabhängig voneinander für eine C₁- bis C₂₀-Alkylgruppe, -Cycloalkylgruppe, -Alkylarylgruppe oder für -[AO]ₙ-R⁴ steht,
wobei A = C₂- bis C₄-Alkylen, R⁴ für H, eine C₁- bis C₂₀-Alkylgruppe, -Cyclohexylgruppe oder -Alkylarylgruppe steht,
und n = 2 - 250,
R³ unabhängig voneinander für NH₂, -NR⁵R⁶, -OR⁷NR⁸R⁹ stehen,
wobei R⁵ und R⁶ unabhängig voneinander für
eine C₁- bis C₂₀-Alkylgruppe, -Cycloalkylgruppe -Alkylaryl¬gruppe oder -Arylgruppe stehen,
oder für eine Hydroxyalkylgruppe oder für eine Acetoxyethyl- (CH₃-CO-O-CH₂-CH₂-) oder eine Hydroxyisopropyl- (HO-CH(CH₃)-CH₂-) oder eine Acetoxyisopropy-Igruppe (CH₃-CO-O-CH(CH₃)-CH₂-) stehen;
oder R⁵ und R⁶ bilden zusammen einen Ring, von dem der Stickstoff ein Teil ist, um einen Morpholin- oder Imidazolinring aufzubauen;
R⁷ eine C₂ -C₄-Alkylengruppe ist,
R⁸ und R⁹ je unabhängig voneinander eine C₁- bis C₂₀-Alkylgruppe, -Cycloalkylgruppe, -Alkylarygruppe, -Arylgruppe oder eine Hydroxyalkylgruppe darstellen, und wobei a, b, c und d Molanteile der jeweiligen Teilstruktureinheiten **S1, S2, S3** und **S4** darstellen, mit
a/b/c/d = (0.1 - 0.9) / (0.1 - 0.9) / (0 - 0.8) / (0 - 0.8), insbesondere a/b/c/d = (0.3 - 0.9) / (0.1 - 0.7) / (0 - 0.6) / (0 - 0.4), bevorzugt a/b/c/d = (0.5 - 0.8) / (0.2 - 0.4) / (0.001 - 0.005) / 0 und mit der Massgabe dass a + b + c + d = 1 ist.

8. Verwendung nach Anspruch 7, **dadurch gekennzeichnet, dass** im Polycarboxylat
a) die Reste R^{u} und R^{v} für Wasserstoff stehen,
b) m = 0 ist,
c) p = 1 ist,
d) R¹ und R², jeweils unabhängig voneinander, für -[AO]ₙ-R⁴ mit n = 20 - 70 und A = C₂-Alkylen stehen,
e) R⁴ eine Methylgruppe darstellt, und/oder
f) a/b/c/d = (0.5 - 0.8) / (0.2 - 0.4) / (0.001 - 0.005)/0.

9. Verwendung nach wenigstens einem der vorangehenden Ansprüche, **dadurch gekennzeichnet, dass** das Fliessmittel in Form einer Zusammensetzung mit wenigstens einem Mahlhilfsmittel eingesetzt wird, wobei insbesondere das Mahlhilfsmittel ausgewählt ist aus der Gruppe umfassend Glykole, organische Amine und Ammoniumsalze von organischen Aminen mit Carbonsäuren.

10. Verwendung nach Anspruch 9, **dadurch gekennzeichnet, dass** das wenigstens eine Mahlhilfsmittel ein Alkanolamin umfasst, wobei es sich insbesondere um Triethanolamin und/oder Triisopropylamin handelt.

11. Verwendung nach Anspruch 9 oder 10, **dadurch gekennzeichnet, dass** das wenigstens eine Mahlhilfsmittel ein Glykol umfasst, wobei es sich insbesondere um Diethylenglykol handelt.

12. Verwendung nach wenigstens einem der Ansprüche 9 - 11, **dadurch gekennzeichnet, dass** die Zusammensetzung beinhaltet oder besteht aus:
a) 5 - 99 Gew.-%, bevorzugt 5 - 50, weiter bevorzugt 5 - 30 Gew.-% Gew.-%, des Fliessmittels;
b) 1 - 80 Gew.-%, bevorzugt 5 - 60 Gew.-%, weiter bevorzugt 5 - 30 Gew.-%, des wenigstens einen Mahlhilfsmittels;
c) 0 - 90 Gew.-%, insbesondere 1 - 20 Gew.-%, wenigstens einer weiteren Komponente;
d) 0 - 90 Gew.-%, insbesondere 10 - 60 Gew.-%, Wasser.

13. Verwendung nach wenigstens einem der vorangehenden Ansprüche, **dadurch gekennzeichnet, dass** das Fliessmittel in einer Menge von 0.001 - 1 Gew.-%, insbesondere 0.003 - 0.2 Gew.-%, weiter bevorzugt 0.003 - 0.1 Gew.-%, noch weiter bevorzugt, 0.005 - 0.07 Gew.-%, bezogen auf das Gewicht der Feststoffpartikel, verwendet wird.

14. Verwendung nach wenigstens einem der vorangehenden Ansprüche, **dadurch gekennzeichnet, dass** das Fliessmittel oder die Zusammensetzung in flüssigem Aggregatszustand eingesetzt wird.

15. Verwendung nach wenigstens einem der vorangehenden Ansprüche, **dadurch gekennzeichnet, dass** das Fliessmittel oder die Zusammensetzung vor und/oder während einem Mahlprozess der Feststoffpartikel zu diesen zugegeben wird.

## Claims

1. Use of a plasticizer for increasing the efficiency of an apparatus for the size separation of solid particles, where the solid particles are particles composed of inorganic and/or mineral solids, **characterized in that** the plasticizer is a polycarboxylate.

2. Use according to Claim 1, **characterized in that** the apparatus for the size separation of solid particles is an air classifier.

3. Use according to at least one of the preceding claims, **characterized in that** the apparatus for the size separation of solid particles is installed downstream of a milling apparatus, in particular a cement mill.

4. Use according to Claim 3, **characterized in that** solid particles which exceed a prescribed size are conveyed from the apparatus for size separation back into the milling apparatus during operation.

5. Use according to at least one of the preceding claims, **characterized in that** at least part of the solid particles contains or consists of a mineral binder and/or an additive for a mineral binder.

6. Use according to at least one of the preceding claims, **characterized in that** the polycarboxylate is a comb polymer which has a polycarboxylate backbone and polyether side chains, where the polyether side chains are bound via ester, ether and/or amide groups to the polycarboxylate backbone.

7. Use according to any of Claims 1-6, **characterized in that** the polycarboxylate or comb polymer comprises or consists of the following substructural units:
a) a mole fractions of a substructural unit **S1** of the formula (I) 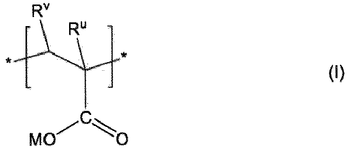
b) b mole fractions of a substructural unit **S2** of the formula (II) 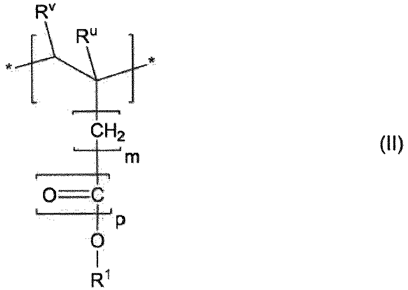
c) c mole fractions of a substructural unit **S3** of the formula (III) 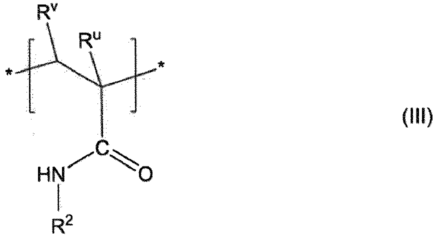
d) d mole fractions of a substructural unit **S4** of the formula (IV) 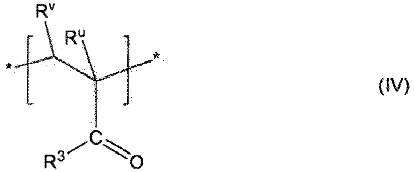 where
M is in each case independently H⁺, an alkali metal ion, alkaline earth metal ion, a divalent or trivalent metal ion, an ammonium ion or an organic ammonium group,
each R^{u} is, independently of the others, hydrogen or a methyl group,
each R^{v} is, independently of the others, hydrogen or COOM,
m = 0, 1 or 2,
p = 0 or 1,
R¹ and R² are each, independently of one another, a C₁-C₂₀-alkyl group, -cycloalkyl group, -alkylaryl group or -[AO]ₙ-R⁴,
where A = C₂-C₄-alkylene, R⁴ is H, a C₁-C₂₀-alkyl group, -cyclohexyl group or -alkylaryl group, and n = 2-250,
R³ is in each case independently NH₂, -NR⁵R⁶, -OR⁷NR⁸R⁹,
where R⁵ and R⁶ are each, independently of one another,
a C₁-C₂₀-alkyl group, -cycloalkyl group, -alkylaryl group or -aryl group,
or is a hydroxyalkyl group or an acetoxyethyl (CH₃-CO-O-CH₂-CH₂-) or a hydroxyisopropyl (HO-CH(CH₃)-CH₂-) or an acetoxyisopropyl group (CH₃-CO-O-CH(CH₃)-CH₂-);
or R⁵ and R⁶ together form a ring of which the nitrogen is a part in order to build up a morpholine or imidazoline ring;
R⁷ is a C₂-C₄-alkylene group,
R⁸ and R⁹ are each, independently of one another, a C₁-C₂₀-alkyl group, -cycloalkyl group, -alkylaryl group, -aryl group or a hydroxyalkyl group,
and a, b, c and d are mole fractions of the respective substructural units **S1**, **S2, S3** and **S4,** where
a/b/c/d = (0.1 - 0.9)/(0.1 - 0.9)/(0 - 0.8)/(0 - 0.8), in particular a/b/c/d = (0.3 - 0.9)/(0.1 - 0.7)/ (0 - 0.6)/(0 - 0.4),
preferably a/b/c/d = (0.5 - 0.8)/(0.2 - 0.4)/ (0.001 - 0.005)/0,
with the proviso that a + b + c + d = 1.

8. Use according to Claim 7, **characterized in that**, in the polycarboxylate,
a) the radicals R^{u} and R^{v} are hydrogen,
b) m = 0,
c) p = 1,
d) R¹ and R² are each, independently of one another, -[AO]ₙ-R⁴ where n = 20 - 70 and A = C₂-alkylene,
e) R⁴ is a methyl group and/or
f) a/b/c/d = (0.5 - 0.8)/(0.2 - 0.4)/(0.001 - 0.005)/0.

9. Use according to at least one of the preceding claims, **characterized in that** the plasticizer is used in the form of a composition comprising at least one grinding aid, where, in particular, the grinding aid is selected from the group consisting of glycols, organic amines and ammonium salts of organic amines with carboxylic acids.

10. Use according to Claim 9, **characterized in that** the at least one grinding aid comprises an alkanolamine, in particular triethanolamine and/or triisopropylamine.

11. Use according to Claim 9 or 10, **characterized in that** the at least one grinding aid comprises a glycol, in particular diethylene glycol.

12. Use according to at least one of Claims 9 - 11, **characterized in that** the composition comprises or consists of:
a) 5 - 99% by weight, preferably 5 - 50% by weight, more preferably 5 - 30% by weight, of the plasticizer;
b) 1 - 80% by weight, preferably 5 - 60% by weight, more preferably 5 - 30% by weight, of the at least one grinding aid;
c) 0 - 90% by weight, in particular 1 - 20% by weight, of at least one further component;
d) 0 - 90% by weight, in particular 10 - 60% by weight of water.

13. Use according to at least one of the preceding claims, **characterized in that** the plasticizer is used in an amount of 0.001 - 1% by weight, in particular 0.003 - 0.2% by weight, more preferably 0.003 - 0.1% by weight, even more preferably 0.005 - 0.07% by weight, based on the weight of the solid particles.

14. Use according to at least one of the preceding claims, **characterized in that** the plasticizer or the composition is used in the liquid state.

15. Use according to at least one of the preceding claims, **characterized in that** the plasticizer or the composition is added to the solid particles before and/or during a process for milling the solid particles.

## Revendications

1. Utilisation d'un fluidifiant pour l'augmentation de l'efficacité d'un dispositif pour la séparation par la taille de particules de solide, les particules de solide étant des particules de solides inorganiques et/ou minéraux, **caractérisée en ce que** le fluidifiant est un polycarboxylate.

2. Utilisation selon la revendication 1, **caractérisée en ce que** le dispositif pour la séparation par la taille de particules de solide est un séparateur à air.

3. Utilisation selon au moins l'une des revendications précédentes, **caractérisée en ce que** le dispositif pour la séparation par la taille de particules de solide est situé en aval d'un dispositif de broyage, en particulier d'un broyeur à ciment.

4. Utilisation selon la revendication 3, **caractérisée en ce que** des particules de solide, qui dépassent une taille prédéfinie, sont alimentées pendant le fonctionnement du dispositif pour la séparation par la taille à nouveau au dispositif de broyage.

5. Utilisation selon au moins l'une des revendications précédentes, **caractérisée en ce qu'**au moins une partie des particules de solide contient un liant minéral et/ou un additif pour un liant minéral ou en est constitué.

6. Utilisation selon au moins l'une des revendications précédentes, **caractérisée en ce que** le polycarboxylate est un polymère en peigne, qui est pourvu d'un squelette de type polycarboxylate et de chaînes latérales de type polyéther, les chaînes latérales de type polyéther étant liées au squelette de type polycarboxylate par l'intermédiaire de groupes ester, éther et/ou amide.

7. Utilisation selon l'une quelconque des revendications 1 à 6, **caractérisée en ce que** le polycarboxylate ou le polymère en peigne comprend des motifs structuraux partiels suivants ou en est constitué :
a) a fractions molaires d'un motif structural partiel **S1** de formule (I) 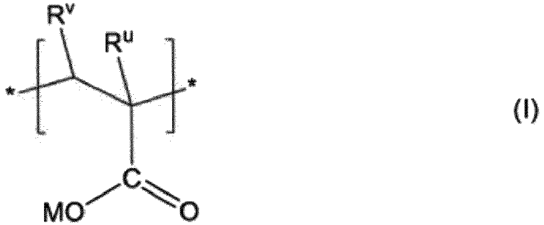
b) b fractions molaires d'un motif structural partiel **S2** de formule (II) 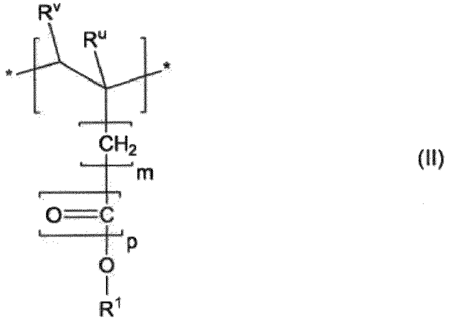
c) c fractions molaires d'un motif structural partiel **S3** de formule (III) 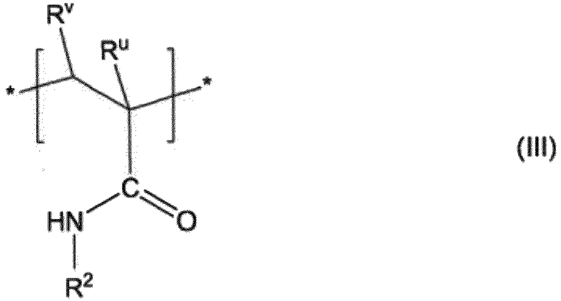
d) d fractions molaires d'un motif structural partiel **S4** de formule (IV) 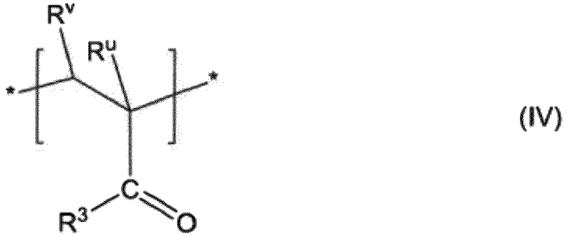
M représentant, indépendamment les uns des autres, H⁺, un ion de métal alcalin, un ion de métal alcalino-terreux, un ion métallique divalent ou trivalent, un ion ammonium ou un groupe ammonium organique,
chaque R^{u} représentant, indépendamment des autres, hydrogène ou un groupe méthyle,
chaque R^{v} représentant, indépendamment des autres, hydrogène ou COOM,
m = 0, 1 ou 2,
p = 0 ou 1,
R¹ et R² représentant indépendamment l'un de l'autre un groupe C₁₋₂₀-alkyle, -cycloalkyle, -alkylaryle ou représentant -[AO]ₙ-R⁴,
A = C₂₋₄-alkylène, R⁴ représentant H, un groupe C₁₋₂₀-alkyle, -cyclohexyle ou -alkylaryle, et n = 2 à 250,
R³ représentant indépendamment les uns des autres NH₂, -NR⁵R⁶, -OR⁷NR⁸R⁹,
R⁵ et R⁶ représentant indépendamment l'un de l'autre un groupe C₁₋₂₀-alkyle, -cycloalkyle, -alkylaryle ou -aryle,
ou représentant un groupe hydroxyalkyle ou un groupe acétoxyéthyle (CH₃-CO-O-CH₂-CH₂-) ou un groupe hydroxy-isopropyle (HO-CH(CH₃)-CH₂-) ou un groupe acétoxyisopropyle (CH₃-CO-O-CH(CH₃)-CH₂-) ;
ou R⁵ et R⁶ formant ensemble un cycle, dont l'azote fait partie, pour construire un cycle morpholine ou imidazoline ;
R⁷ étant un groupe C₂₋₄-alkylène,
R⁸ et R⁹ représentant chacun indépendamment l'un de l'autre un groupe C₁₋₂₀-alkyle, -cycloalkyle, -alkylaryle, -aryle ou un groupe hydroxyalkyle,
et a, b, c et d représentant des fractions molaires des motifs structuraux partiels respectifs **S1**, **S2**, **S3** et **S4**, avec
a/b/c/d = (0,1 - 0,9)/(0,1 - 0,9)/(0 - 0,8)/(0 - 0,8),
en particulier a/b/c/d = (0,3 - 0,9)/(0,1 - 0,7)/(0 - 0,6)/(0 - 0,4),
préférablement a/b/c/d = (0,5 - 0,8)/(0,2 - 0,4)/(0,001 - 0,005)/0
et à la condition que a + b + c + d = 1.

8. Utilisation selon la revendication 7, **caractérisée en ce que** dans le polycarboxylate
a) les radicaux R^{u} et R^{v} représentent hydrogène,
b) m = 0,
c) p = 1,
d) R¹ et R², à chaque fois indépendamment l'un de l'autre, représentent -[AO]ₙ-R⁴ avec n = 20 à 70 et A = C₂-alkylène,
e) R⁴ représente un groupe méthyle, et/ou
f) a/b/c/d = (0,5 - 0,8)/(0,2 - 0,4)/(0,001 - 0,005)/0.

9. Utilisation selon au moins l'une des revendications précédentes, **caractérisée en ce que** le fluidifiant est utilisé sous forme d'une composition comportant au moins un adjuvant de broyage, en particulier l'adjuvant de broyage étant choisi dans le groupe comprenant des glycols, des amines organiques et des sels d'ammonium d'amines organiques avec des acides carboxyliques.

10. Utilisation selon la revendication 9, **caractérisé en ce que** l'au moins un adjuvant de broyage comprend une alcanolamine, qui est en particulier la triéthanolamine et/ou la triisopropylamine.

11. Utilisation selon la revendication 9 ou 10, **caractérisée en ce que** l'au moins un adjuvant comprend un glycol, qui est en particulier le diéthylèneglycol.

12. Utilisation selon au moins l'une des revendications 9 à 11, **caractérisée en ce que** la composition contient ou est constituée de :
a) 5 à 99 % en poids, préférablement 5 à 50, plus préférablement 5 à 30 % en poids, du fluidifiant ;
b) 1 à 80 % en poids, préférablement 5 à 60 % en poids, plus préférablement 5 à 30 % en poids, de l'au moins un adjuvant de broyage ;
c) 0 à 90 % en poids, en particulier 1 à 20 % en poids, d'au moins un composant supplémentaire ;
d) 0 à 90 % en poids, en particulier 10 à 60 % en poids, d'eau.

13. Utilisation selon au moins l'une des revendications précédentes, **caractérisée en ce que** le fluidifiant est utilisé en une quantité de 0,001 à 1 % en poids, en particulier 0,003 à 0,2 % en poids, plus préférablement 0,003 à 0,1 % en poids, encore plus préférablement 0,005 à 0,07 % en poids, par rapport au poids des particules de solide.

14. Utilisation selon au moins l'une des revendications précédentes, **caractérisée en ce que** le fluidifiant ou la composition est utilisé(e) à l'état d'agrégat liquide.

15. Utilisation selon au moins l'une des revendications précédentes, **caractérisée en ce que** le fluidifiant ou la composition est ajouté(e) aux particules de solide avant et/ou pendant un procédé de broyage de celles-ci.
